# EUROPEAN PATENT SPECIFICATION

(11) **EP 3 937 616 B1**
(45) Date of publication and mention of the grant of the patent: **21.09.2022**
(21) Application number: 20718366.6
(22) Date of filing: 13.03.2020
(51) Int. Cl.: A01G 31/02, A01G 31/06

(54) **SYSTEM AND METHOD FOR CULTIVATING PLANT PRODUCTS WITHOUT SOIL**
SYSTEM UND VERFAHREN ZUR KULTIVIERUNG VON PFLANZENPRODUKTEN OHNE ERDE
DISPOSITIF ET PROCÉDÉ POUR LA CULTURE DES PRODUITS VÉGÉTAUX SANS SOL

(30) Priority: 13.03.2019 IT 201900003689
(43) Date of publication of application: 19.01.2022
(73) Proprietor: ZERO SRL, 33170 Pordenone (IT)
(72) Inventor: ALESSIO, Andrea, 33170 Pordenone (IT); MODESTO, Daniele, 33170 Pordenone (IT)
(74) Representative: Zamprogno, Bruno
(86) International application number: PCT/IB2020/052273
(87) International publication number: WO 2020/183426

(56) References cited:
- WO-A1-2014/039904
- WO-A1-2018/107176
- WO-A1-2018/117829
- CN-A- 109 275 557
- US-A- 4 028 847

## Description

### TECHNICAL FIELD

The present invention relates to a system and method for cultivating plant products without soil. Particularly, the present invention regards a method and system for vertically cultivating plant products without soil (Vertical Farms) with hydroponic and/or aeroponic feeding.

### BACKGROUND ART

As is well known, methods for cultivating plant products implemented by the current vertical cultivation systems, the so-called soil-free or above-ground systems, provide for using horizontal support trays or shelves suspended and stacked upon several vertical levels, and controllably feeding fertilizing substances to the same by means of hydroponic and/or aeroponic feeding systems.

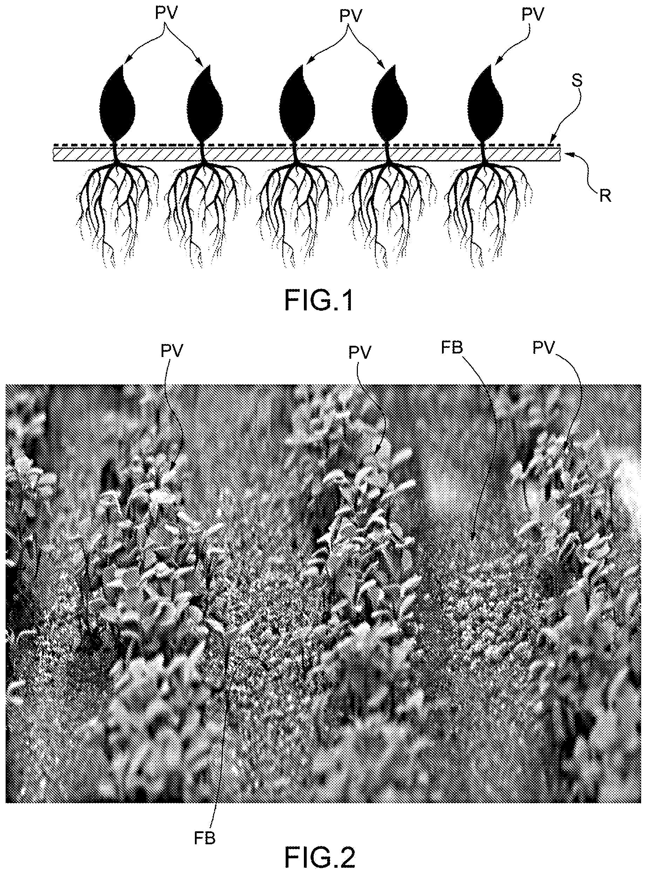

Referring to Figure 1, the above-mentioned methods generally provide for the use of a support/gripping layer S which coats the top of a support shelf R of plant products PV. A particularly widespread support/gripping layer S is the non-woven layer since on the one hand it is suitable for the support and rooting of seeds during the seeding operations, and on the other hand it plays a root gripping role during the plant product growth.

However, using the support/gripping layer has the following technical problems.

Firstly, the support/gripping layer is degraded by the roots and cultivation operations and therefore has to be replaced by a new support/gripping layer upon the completion of each production cycle. The operation of replacing the support/gripping layer on support shelves entails costs that significantly affect production costs.

Secondly, root anchorage on the support/gripping layer during the growth steps following seeding makes the so-called "replanting" operations particularly complex and therefore costly, as they provide for the transfer of plant products from one shelf to other growth shelves so as to control their density based on the size increase of said plant products.

Moreover, using the support/gripping layer, particularly the non-woven layer in the cultivation methods described above, has the technical problem of causing the proliferation of undesired fungi and bacteria, referred to as FB in the picture of Figure 2, among plant products which can compromise the cultivation of said plant products.

US 4 028 847 describes a traditional hydroponic system provided with trays comprising support bars and a series of plant containers removably coupled with support bars. Each plant container internally contains a support block which in turn is designed to support the plant. The support block is arranged so as to rest on the inner surface of the container and, in use, the plant roots pass through and grip onto the same.

A technical problem of the system described in US 4 028 847 is that the support blocks used in the trays, besides promoting the proliferation of fungi, algae, molds and bacteria affect the total production costs of plant products since they have to be replaced and disposed of at each production cycle.

Another technical problem of the system described in US 4 028 847 is that the use of plant containers which can be coupled to support bars affects the total production costs.

WO 2018/117829 A1 describes a hydroponic system provided with floating stackable trays made of polystyrene. Each tray has grooves extending straight and parallel to one another. Each groove is filled up with a substrate and has a plurality of seeds and plant products planted in the substrate.

A technical problem of WO 2018/117829 A1 is that the substrate present in the grooves, besides promoting the proliferation of fungi, algae, molds and bacteria, affects the total production costs of plant products since it requires loading operations in the grooves at each production cycle.

Furthermore, the arrangement of the grooves in the tray at fixed distances between each other does not satisfactorily resolve the problem of the complexity of "replanting" operations (transplanting) of plant products from a shelf described above in detail.

WO 2014/039904 A1 discloses an method and system for cultivating plant products without soil. This document discloses the use of floating trays in an aquaponic shelf, wherein the trays are provided with seats made by concave recesses having on the corresponding bottom walls through openings. The seats are adapted to house seeds without the further need for substrate between the recess wall and the seed.

To this end, the Applicant carried out an exhaustive study with the aim of identifying a solution, which allows to resolve the above-mentioned technical problems.

### DISCLOSURE OF INVENTION

Hence, the object of the present invention is to provide a vertical cultivation system and method which is capable of: reducing the proliferation of undesired fungi and bacteria on the support shelf, simplifying the product density control operations during the various growth steps following seeding, eliminating costs associated with the use of a cultivation layer.

### BRIEF DESCRIPTION OF THE DRAWINGS

This object is achieved by the present invention by the fact that it relates to a vertical system and method for cultivating plant products as defined in the corresponding attached claims. The present invention will now be described with reference to the accompanying drawings, illustrating a non-limiting implementation example:
- Figure 1 schematically shows a section of a cultivation shelf according to the state of the art,
- Figure 2 is a picture showing the fungi and bacteria proliferation on a cultivation layer coating a well-known type of cultivation shelf,
- Figure 3 schematically shows a cultivation module of a vertical system for cultivating plant products which is produced according to the present invention,
- Figure 4 shows a plan view of a bar of a cultivation shelf used in the vertical cultivation system which is produced according to the present invention,
- Figure 5 shows a side elevation view of the bar shown in Figure 4,
- Figure 6 is a longitudinal vertical section of the bar shown in Figure 4,
- Figure 7 is the I-I section of the bar shown in Figure 4, wherein a seed was added,
- Figure 8 is a perspective view of a cultivation shelf provided with a plurality of bars produced according to the present invention,
- Figure 9 is a plan view of the cultivation shelf shown in Figure 8,
- Figure 10 is a perspective view of a cultivation shelf provided with a plurality of spaced apart bars produced according to the present invention,
- Figures from 11 to 14 schematically show the same amount of operating steps of the cultivation method according to the present invention.

### BEST MODE FOR CARRYING OUT THE INVENTION

The present invention will now be described in detail with reference to the attached Figures to allow a person skilled in the art to produce and use the same. Various modifications to the described embodiments will become immediately apparent to those skilled in the art and the described general principles can be applied to other embodiments and applications without departing from the protective scope of the present invention, as defined in the attached claims.

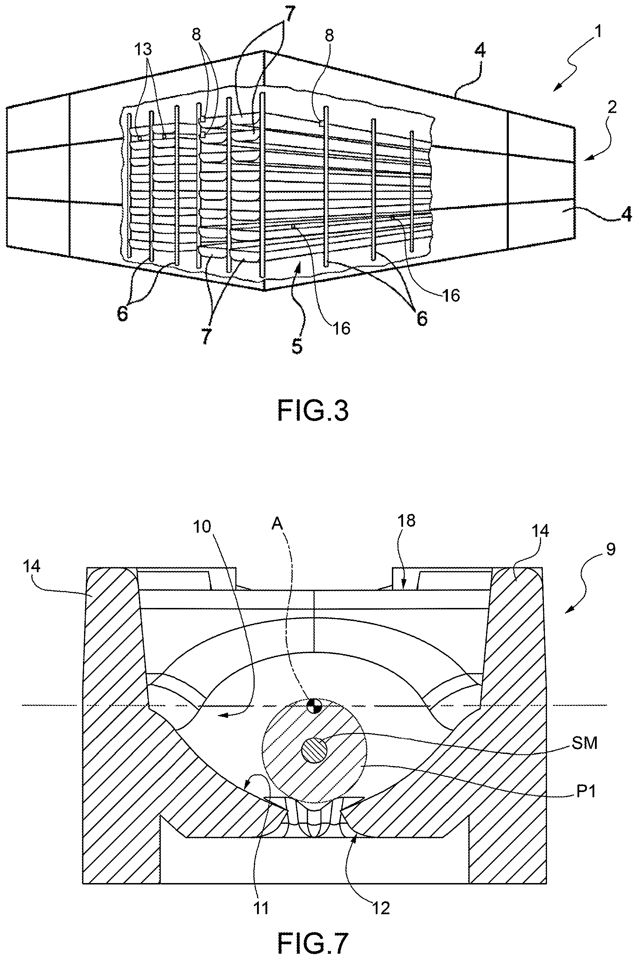

According to an exemplifying embodiment schematically shown in Figure 3, reference 1 refers schematically as a whole to a vertical system for cultivating plant products. The system 1 comprises a cultivation module 2, which internally bounds an artificial cultivation environment with a vertical, soil-free support architecture for the intensive growth of plant products under controlled environmental conditions.

The cultivation module 2 can comprise, for example, a cultivation container 4, which internally bounds/contains the above-mentioned artificial cultivation environment. It is understood that "artificial cultivation environment" means a production soil-free/over-ground (grow area) area/space, in which the cultivation method is performed.

It is understood that in the following description the term "soil-free" cultivation system means a system that involves the cultivation of plant products without using support layers/substrates that are designed to support/grip the roots and are based on soil/loam and/or fabric and/or inorganic granular compounds, or the like.

It is also understood that the term plant product, according to the present invention, preferably means any plant products for food use, such as, for example, salads, vegetables, green vegetables, aromatic herbs (for example, basil, mint), or the like. It should be understood, however, that the above invention is not limited to plant products for food use of the above-mentioned type by way of example, but can also be applied to the cultivation of other types of plant products generally cultivated in traditional "in-soil" greenhouses, such as flowers, plants or the like.

The cultivation container 4 is closed and can have, for example, a suitably parallelepipedal shape, which internally bounds the artificial cultivation space/environment.

With reference to Figure 3, the cultivation module 2 also comprises a plurality of cultivation structures 5. Preferably, the cultivation structures 5 have a vertical architecture. The cultivation structures 5 are arranged inside the cultivation container 4 and comprise modular cultivation shelves 7, which are designed to house said plant products and/or seeds thereof during the cultivation process. The cultivation structures 5 comprise supporting frames 6 onto which cultivation trays or shelves 7 are mounted. The cultivation shelves 7, for example, can be arranged on frames 6 so as to form a series of vertical columns in which the cultivation shelves 7 are arranged suspended, spaced one above each other.

The cultivation module 2 also comprises: a sensor system 8 (partially and schematically shown), which is arranged inside the cultivation container 4 and is configured so as to determine/detect predefined cultivation parameters associated with the implemented cultivation process. According to a possible embodiment, the cultivation parameters measured by the sensor system 8, for example via sensors thereof, can comprise, for example, one or more of the following parameters: parameters indicating humidity, parameters indicating temperature, parameters indicating carbon dioxide.

The cultivation module 2 also comprises a fertigation system 13 (only partially and schematically shown in Figure 2), which is arranged inside the cultivation container 4, and is structured to feed fertilizer-based substances to cultivated plant products in a selective and controlled way in terms of quantity and/or type and/or feeding times. Preferably, the fertigation system 13 can comprise an aeroponic and/or hydroponic fertigation system provided with respective aeroponic/hydroponic devices.

In addition, the cultivation module 2 can comprise a lighting system 16 (only partially and schematically shown in Figure 2), which is arranged inside the cultivation container 4. The lighting system 16 is configured to light the cultivation environment in a controlled way according to preset lighting parameters. The preset lighting parameters can be indicative of the intensity and/or wavelength of the light. The lighting system 16 can comprise electric lighting sources, e.g. LED lighting sources (not shown) or similar electric sources, arranged near the shelves/trays 7, for example above them, so as to light the underlying cultivation area.

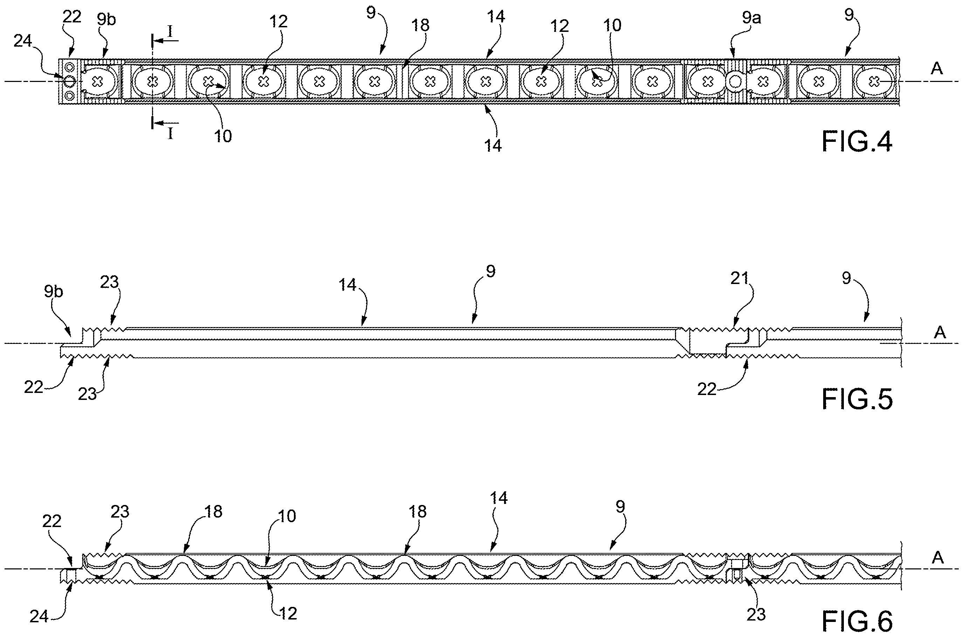

With reference to Figures 4-9, the cultivation shelf 7 comprises one or more rods, i.e. seeding and growth bars 9 made of plastic material. Preferably, the seeding and growth bars 9 are conveniently made of recyclable polymer material. Preferably, the plastic material is made of a food grade polymer material.

The Applicant also found that a particularly advantageous material for constructing the seeding and growth bars 9 can derive from PPE-modified resins. For example, it is advantageous to use PPE resins consisting of amorphous blends of PPO resin (polyphenylene ether) and polystyrene. For example, the Applicant found it advantageous to use PPE-modified resins belonging to the NORLY ^{™}product family.

Each seeding and growth bar 9 extends along a longitudinal axis A and is provided with a plurality of recesses or seats 10 designed to house seeds.

The seats 10 are made on the upper surface of the bar 9 and are spaced apart from each other along the longitudinal axis A. The seats 10 are formed by recesses or concave cavities having on the bottom 11 a through opening 12 structured so as to be passed through by, and remain in direct contact with, the roots of the plant product during growth thereof. Preferably, the seats 10 have approximately a cup shape. Preferably, the seats 10 are approximately arranged at equal distance from each other along axis A. Preferably, the opening 12 has a cross-like shape and is made on the bottom wall 11 of the cup-like seat.

The inner surface of the seats 10 where the seeds SM are arranged is devoid of, i.e. not coated with, support/gripping layers. The seats 10 are devoid of any support layers/substrates on the inside, and the seeds SM are arranged resting upon, i.e. in direct contact with, the polymer-based inner surface of the seats 10. The seats 10 are devoid of, i.e. without, any layers/substrates/soils/loams for the support/gripping of said roots of said plant products.

The openings 12 made on the bottom walls of the seats 10 communicate directly with the inner gap of the seats 10 thereof, whose inner surface is entirely exposed, i.e. it is not covered/coated with any layers/substrates/soils/loams for the support/gripping of plant products.

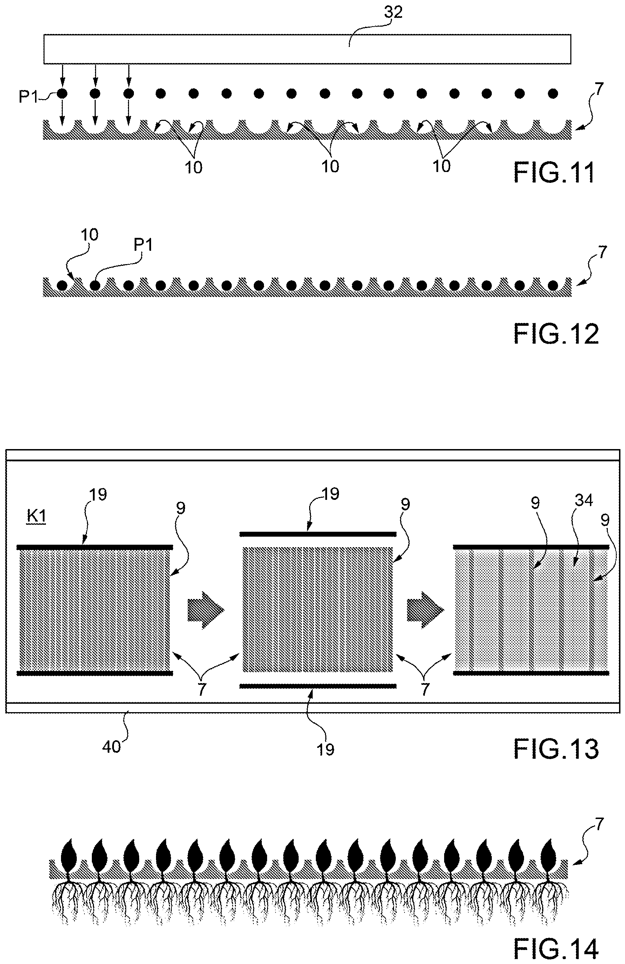

In use, the seeds SM are arranged inside the seats 10 so as to be resting upon, i.e. in direct contact with, the inner surface of said seats 10, without any interposition of support/gripping layers (Figures 7 and 11). In particular, the seeds SM are arranged in the seats 10 so as to be in direct communication with the respective openings 12 without any interposition of any layers/substrates/loams between the seed SM and the opening 12.

The Applicant found that the use of seats 10 provided with through openings 12 on the bottom wall 11 allows, on the one hand, to house the seeds SM on the bar 9 and, on the other hand, to grip by means of the openings 12, the roots to said bar 9, without the need to utilize any intermediate support/gripping layer between the seed SM and the bar 9.

In addition, the Applicant found that the cross shape of the opening 12, unlike a completely circular opening, for example a hole, has the technical effect of increasing the surface tension of the water deposited on the bottom wall 11 of the seat 10, and therefore retains a high moisture content on the contact surface with the seed/product present in said seat 10.

Preferably, the seeding and growth bar 9 are substantially straight, having a substantially parallelepipedal shape. Preferably, the bars 9 laterally have two vertical containment bands 14, approximately of elongated rectangular shape, extending parallel to each other and axis A, preferably for the total length of the bar 9 and are arranged by opposed bands of the seats 10.

The seats 10 are attached to one another on top by intermediate round portions 18, namely curvilinear, laterally bounded by the two opposite containment bands 14.

The Applicant found that using intermediate curvilinear portions 18 bounded by the two side bands 14 has the technical effect of, on the one hand, facilitating cleaning, particularly the washing of the bar 9 and seats 10 thereof, and on the other hand, self-centering seeds SM in the seats 10 during the seeding step.

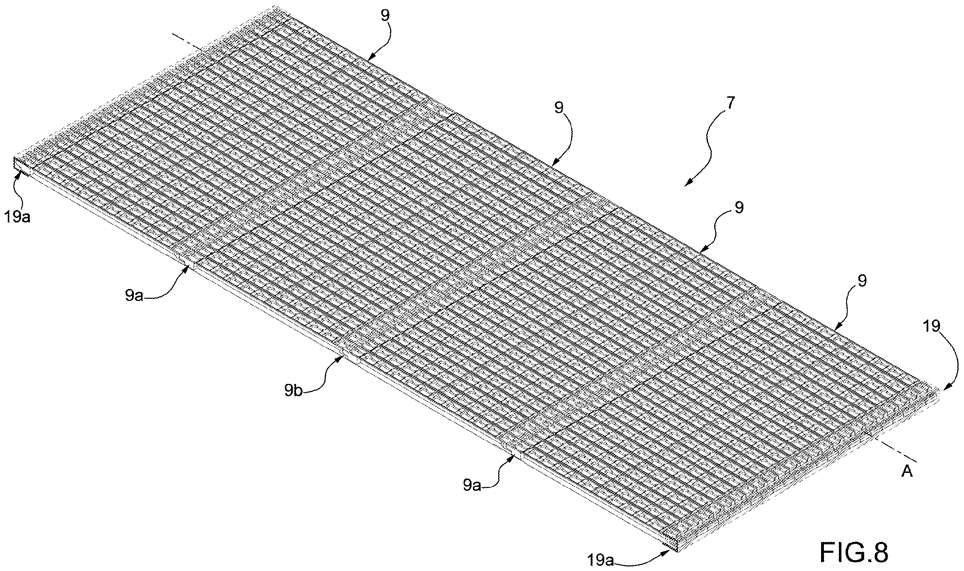

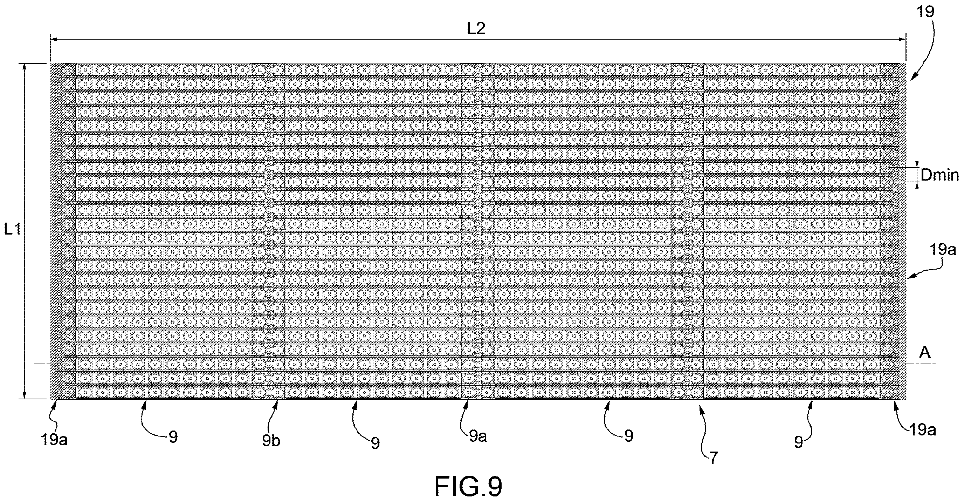

With reference to Figures 8 and 9, the cultivation shelf 7 comprises a supporting frame 19 to which seeding and growth bars 9 are coupled. Preferably, the bars 9 are easily removably coupled with the supporting frame 19 and are arranged substantially coplanar to each other in parallel positions, side by side.

According to a possible embodiment, the supporting frame 19 can comprise at least two sections 19a in hard material approximately C-shaped arranged parallel to each other and inserted onto the opposite ends 9a and 9b of the bars 9 so as to fixedly retain them.

Preferably, the bars 9 of a cultivation shelf 7 preferably have the same size in length, width and height. Preferably, the width of the bar 9 (measured transversely to axis A) can be approximately 1.2 cm. Preferably, the length of the bar 9 can range between approximately 18 cm and approximately 20 cm, preferably 19 cm.

Preferably, the bars 9 can be black. Preferably, at least the upper surface of the bars 9 can be black. The Applicant found that using black bars, at least on the upper part, has the technical effect of increasing the plant product image definition and resolution captured by an artificial viewing system (not shown) as to the underlying background defined by the upper surface of the bars 9 in the shelf 7. The black background has a further technical effect of simplifying the identification of the plants contained in a picture thereof acquired by the artificial viewing system.

Preferably, each bar 9 comprises a single body, i.e. a monobloc. Preferably, the bars 9 are monolithic. Preferably, the bars 9 can be made by means of a plastic material injection molding method.

With reference to Figures 4-6, each axial end 9a of the bars 9 can be preferably shaped to be fixedly connected to an axial end 9b of another bar 9 by connecting means, for example screws, so that the length along axis A can be adjusted.

To this end, according to an embodiment shown in the attached Figures, the opposite axial ends 9a and 9b of each bar 9 have respectively one upper rectangular flap 21 and one lower rectangular flap 22. The upper flaps 21 and 22 cantileverly protrude from the respective ends 9a, 9b opposite to the bars 9 and are structured and sized such that, in use, they overlap with a lower flap 22 and respectively an upper flap 21 of two axially adjacent bars 9. From the lower surface of the upper flap 22 of the bar 9 pins 23 protrude towards the bottom, which, in use, are inserted in respective holes 24 made on the lower flap 22.

In addition, the upper 21 and lower 22 flaps are provided with respective central holes coaxial with each other when the flaps are arranged on top of each other, receiving fixing screws (not shown). On the upper and lower surfaces of the flaps 21 and respectively 22, a gear teeth 23 is made transversally oriented to axis A, which extends at least partially on the upper and respectively lower edges of the two bands 14.

Preferably, the bars 9 can be axially connected to each other so as to extend up to reaching a length that depends on the size of the supporting frame 19.

With reference to Figure 9, the cultivation shelf 7 made up of the bars 9 and respective frame 19 can be sized so as to have a width L1 of approximately 70 cm and a width L2 of approximately 120 cm.

With reference to Figures 7 and 11, as for instead the seats 10, according to an embodiment, they can be shaped so as to contain each one a seed SM and/or a pill P1 containing the seed SM. Preferably, the pill P1 can comprise an approximately spherical/ovoidal body made of hydrophilic gelatin which incorporates the seed SM or a group of seeds. In case the pill P1 is ovoidal, its minor diameter (i.e., measured on the minor semiaxis of its longitudinal section) can be less than 0.7 cm; its major diameter (i.e., measured on the major semiaxis of its longitudinal section) can be more than 1.2 cm.

Preferably, the cup-shaped seat 10 can be substantially complementary to the shape of the pill P1 so as to form a containment cradle of said pill P1. Preferably, the cup-shaped seat 10 can have a minor diameter, transversal to axis A, less than approximately 0.7 cm; a major diameter, coaxial to axis A, more than approximately 1.2 cm, and a central depth, transversal to axis A and measured on the axis of the opening 12, less than approximately 0.4 cm.

With reference to Figures 11-14, the vertical method for cultivating plant products according to the present invention will be described hereinafter. With the sole purpose of increasing the understanding of the present invention without however losing its broad scope, the method applied by means of one of the cultivation shelves 7 will be described and shown, it being understood that the same operations described below are replicated on a plurality of shelves 7 of the system 1.

Figure 11 schematically shows a cultivation shelf 7 arranged for a "seeding" step. The cultivation shelf 7 is configured according to a first density configuration/state K1 (high density), where the bars 9 are each arranged with side bands 14 in contact with the side bands 14 of the adjacent bars 9 (similarly to the shelf shown in Figures 8 and 9). In this way, the seats 10 are aligned with each other to form rows and columns at a minimum distance Dmin from one another (Figure 9). Preferably, the minimum distance Dimin between each seat 10 with respect to the seat 10 immediately adjacent to another bar 9 can be approximately 1.2 cm.

In the seeding step, the method comprises the step of placing the pills P1 in the seats 10 (Figure 11). Preferably, the positioning of the pills P1 in the seats 10 can be carried out by a positioning system, for example a hydraulic or pneumatic system 32 (schematically shown in Figure 11).

After completing the seeding step, the cultivation shelf 7 is arranged in a germination control area present in the cultivation module 2. It is understood that in this step the fertigation system 13 and the lighting system 16 are driven by a central control unit of the cultivation process (not shown) such that the light emitted towards the cultivation shelf 7 and the substances fed at said cultivation shelf 7 are controlled based on a germination program.

When at least one of the plant product sizes present in the cultivation shelf 7, for example width, reaches a pre-set threshold, a procedure for reducing the density of the products present in said cultivation shelf 7 is performed from the first density to a second pre-set density (the so-called replanting step).

The density reduction procedure can comprise the steps of selectively decoupling the pre-set seeding and growth bars 9 from the supporting frame 19 of the cultivation shelf 7 and coupling them to the supporting frame 19 of another cultivation shelf 7 such that the adjacent seeding and growth bars 9 are arranged at a pre-set distance from one another (as shown in the example of Figure 13). The pre-set distance can depend on the size reached by the plant products and/or the product density in said cultivation shelf 7. It is understood that density means the number of plant products per square meter.

Conveniently, the distance between the bars 9 can be a multiple value of the width of the bars 9. According to a possible embodiment, a procedure is carried out which provides for decoupling the bars 9 from the supporting frame 19 of the cultivation shelf 7 and dividing them into N groups and coupling each group of bars 9 to N cultivation shelves 7.

The N number of groups can vary depending on the density required in each shelf 7 in the operational cultivation step being carried out. For example, in the operational cultivation step following the germination step, N can be 2, i.e. the N bars 9 present in the first shelf 7 are divided into two groups containing N/2 bars 9, and the N/2 bars 9 are coupled with the supporting frame of the respective shelf 7 at the pre-set distance DB based on the density and/or size of the products (Figures 11 and 13).

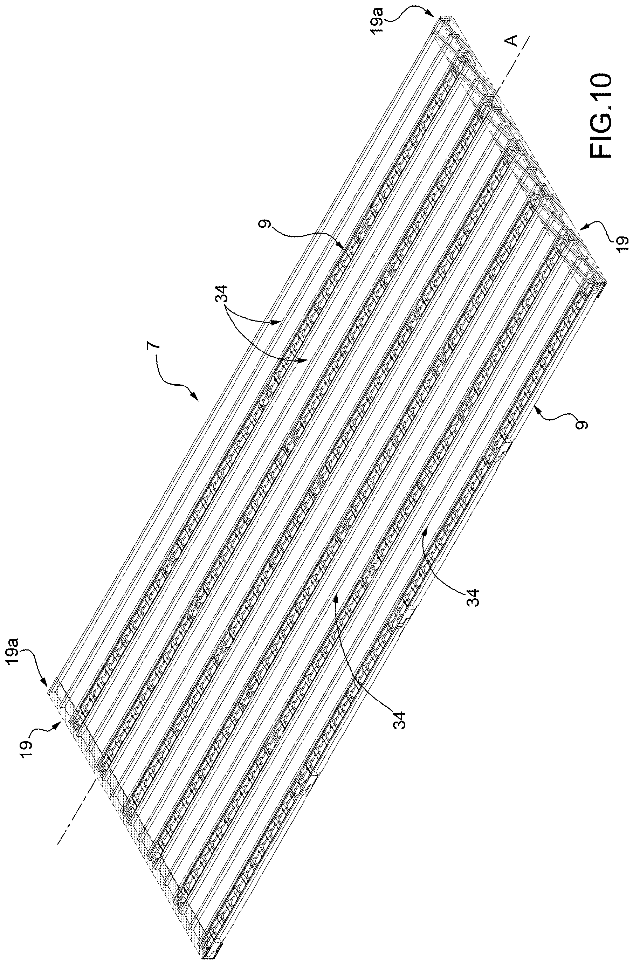

Preferably, the free gaps of the shelf 7 in-between the spaced apart bars 7 can be covered by an equal number of elongated rectangular lids 34 structured for being coupled with the supporting frame 19 of said shelf 7 (Figures 10 and 13) .

Preferably, the steps of selectively decoupling the pre-set seeding and growth bars 9 from the supporting frame 19 of the cultivation shelf 7 and coupling them to the supporting frame 19 of another cultivation shelf 7, can be carried out by an automated mechanical system 40 (Figure 13). The automated mechanical system 40 can comprise, for example, a grasping mechanism of the shelf 7, a mechanism structured for separating the bars 7 from the supporting frame 19, and a mechanism which inserts a given number of bars 9 into the supporting frame 19 of another shelf 7.

After arranging shelf 7 with a low-density, said shelf is placed in a pre-set cultivation area associated with modified density thereof.

It is understood that the distances between the bars 9 in the respective shelves 7 can also depend on: the duration of the high density step, the duration of the low density step; the low density to high density ratio expressed by 1/N fraction, the width of the bars 9, the size of the opening 12, the number of seats 10 for each bar 9.

Tests performed by the Applicant showed that the method described above is particularly advantageous for the cultivation of ready-to-use salads (baby leaf salads) with rapid cultivation cycle (2 to 5 weeks). The advantages of the method described above are also the following.

Firstly, the method allows to rearrange in a simple and cost-effective way plant products in relation to their development stage (static management).

The method eliminates the need for employing the cultivation layer. Eliminating the cultivation layer results in an elimination of the related disadvantages , i.e. costs relating to: purchase, installation and assembly on shelves, dismantling and disassembling from shelves, washing, and disposal. In particular, eliminating the support layers and/or cultivation layers, and using bars made of recyclable-type plastic material allows to strongly reduce the amount of waste produced during cultivation.

The elimination of the cultivation layer also results in a significant reduction of the fungi and bacteria or algae proliferation on the shelves.

The elimination of the cultivation layer also results in a lower evaporation of water and therefore in a maximization of the water utilized.

Another technical effect of the bars devoid of cultivation layers/supports is the elimination of the presence of polluting substances which are generally present in said cultivation layers/supports such as, for example, heavy metals and allergens.

The bar washing, sterilization and sanitation procedures at the end of a production cycle are simple and convenient to carry out. The 70-cm longitudinal bar management is quick and simple. It should be highlighted that in the shelf described above, the only access to nutrients by the plant product occurs via the through opening made on the bottom of the seat, which is occupied by the roots emerging from the seed pill. Owing to this, free areas of the shelf which are moistened and lit are significantly reduced if not eliminated and therefore are traditionally subject to proliferation. In fact, in the high density step, plants rapidly cover all the cultivation shelf surface preventing proliferation. In the low-density step, the filling areas between the bars are not reached by nutrient solutions and consequently cannot be colonized by fungi.

Finally, it is clear that the vertical cultivation system and method described and shown above can be modified and changed without for this reason departing from the scope of the present invention as defined by the attached claims.

## Claims

1. A method for cultivating plant products without soil, comprising the following steps:
a) providing at least one cultivation shelf (7), which comprises one supporting frame (19) and a plurality of seeding and growth bars (9) made of polymer material, which are easily removably coupled with said supporting frame (19) and are arranged substantially coplanar to each other in parallel positions, side by side, said seeding and growth bars (9) are rods,
the seeding and growth bars (9) extend straight along respective longitudinal axes (A), and are provided with seats (10) which are adapted to house seeds (SM) and/or pills (P1) containing said seeds (SM),
said seats (10) are made by concave recesses having on the corresponding bottom walls (11) respective through openings (12) structured for being traversed by, and remaining in direct contact with, the roots of the plant products during growth thereof,
said seats (10) are arranged longitudinally one after another along said respective seeding and growth bars (9) spaced apart from one another and internally without any
layers or substrates for the support or gripping of said roots of said plant products,
b) selectively placing said seeds (SM) and/or said pills (P1) containing seeds (SM) into the respective seats (10) so that the seed (SM) and/or pill (P1) rests directly on, and is in contact with, the inner surface of the seat (10) thereof without any interposition of support layers or substrates between said seed (SM) and/or pill (P1) and said through opening (12) of said seat (10);
c) supplying fertilizer-based substances to the seeds (SM) and/or said pills (P1) contained in said seats (10) of said seeding and growth bars (9).

2. The method according to Claim 1, wherein, after performing the step of selectively placing said seeds (SM) and/or said pills (P1) containing seeds (SM) inside the respective seats (10), said seats (10) internally contain only said seeds (SM) and/or said pills (P1) and do not contain support layers or substrates between the seed (SM) and/or pill (P1) and said through opening (12).

3. The method according to Claims 1 or 2, comprising:
in a first cultivation step associated with a first cultivation density, coupling said seeding and growth bars (9) to a supporting frame (19) of a first shelf (7) so that said bars (9) are arranged at a first pre-set distance from one another,
in a second cultivation step that is subsequent to said first cultivation step and is associated with a second cultivation density lower than the first cultivation density, decoupling bars (9) from the corresponding supporting frame (19) of said first shelf (7) and coupling them to the supporting frame (19) of a second shelf (7) so as to arrange them at a second pre-set distance from one another greater than said first pre-set distance.

4. The method according to Claim 3, wherein said step of selectively decoupling said bars (9) from the supporting frame (19) of said first shelf (7) and coupling them to the supporting frame (19) of a second shelf (7) is performed by an automated mechanical system (40).

5. The method according to Claims 3 or 4, comprising the step of coupling lids (34) having an elongated rectangular shape to the supporting frame (19) of said second cultivation shelf (7) so as to cover the gaps present between the bars (9) spaced apart from one another.

6. The method according to any one of the preceding claims, wherein said seeding and growth bars (9) are monolithic.

7. The method according to any one of the preceding claims, wherein an axial end (9a) of the seeding and growth bar (9) can be fixedly connected to an axial end (9b) of another seeding and growth bar (9) by connecting means so as to adjust the length thereof.

8. The method according to any one of the preceding claims, wherein said pill (P1) comprises an approximately spherical or ovoidal body made of hydrophilic gelatin which incorporates said seed (SM).

9. The method according to Claim 8, wherein said seats (10) are in a form approximately complementary to the form of the pills (P1) such to form containment cradles of the pills (P1).

10. The method according to any one of the preceding claims, wherein the distance between the seeding and growth bars (9) is a multiple value of the length of said bars (9).

11. A system for cultivating plant products without soil comprising:
at least one cultivation structure (5) provided with one or more cultivation shelves (7) designed to support seeds (SM) and/or pills (P1) containing said seeds and/or plant products during seeding and respectively growth of said plant products,
said shelves (7) comprise supporting frames (19) and a plurality of seeding and growth bars (9) made of polymer material, which are easily removably coupled with respective supporting frame (19) and are arranged substantially coplanar to each other in parallel positions, side by side, said seeding and growth bars (9) are rods,
the seeding and growth bars (9) extend rectilinearly along respective longitudinal axes (A), and are provided with seats (10) which are adapted to house seeds (SM) and/or pills (P1) containing said seeds (SM),
said seats (10) are made by concave recesses having on the corresponding bottom walls (11) respective through openings (12) structured for being traversed by, and remaining in direct contact with, the roots of the plant products during growth thereof,
said seats (10) are arranged longitudinally one after another along said respective seeding and growth bars (9) spaced apart from one another and are internally devoid of any layers or substrates for the support or gripping of said roots of said plant products,
seeding means (32) structured to selectively place said seeds (SM) and/or said pills (P1) containing seeds (SM) inside the respective seats (10) so that the seed (SM) and/or pill (P1) rests directly upon, and in contact with, the inner surface of the seat (10) thereof without any interposition of support layers or substrates between said seed (SM) and/or pill (P1) and said through opening (12) of said seat (10),
fertigation means (13) for supplying fertilizer-based substances to the seeds (SM) and/or said pills (P1) contained in said seats (10) of said seeding and growth bars (9).

12. The system according to claim 11, wherein said seeding and growth bars (9) are coupled with a supporting frame (19) of a first shelf (7) so that said seeding and growth bars (9) are arranged at a first pre-set distance from one another associated with a first cultivation density, the system also comprises:
an automated mechanical system (40) structured for selectively decoupling pre-set seeding and growth bars (9) from the supporting frame (19) of said first cultivation shelf (7) and coupling them to the supporting frame (19) of a second shelf (7) so as to arrange them at a second pre-set distance from one another greater than said first pre-set distance, wherein the second distance is associated with a second cultivation density lower than the first cultivation density,
electronic control means adapted to drive said automated mechanical system (40).

13. The system according to Claims 11 or 12, wherein after performing the step of selectively arranging said seeds (SM) and/or said pills (P1) containing seeds (SM) inside the respective seats (10) via said seeding means (32), said seats (10) of the seeding and growth bars (9) internally contain only said seeds (SM) and/or said pills (P1) and do not contain support layers or substrates between the seeds (SM) and/or pills (P1) and said through openings (12).

14. The system according to any one of Claims 11 to 13, wherein said seeding and growth bars (9) are monolithic.

15. The system according to any one of the Claims 11 to 14, wherein an axial end (9a) of the seeding and growth bar (9) can be fixedly connected to an axial end (9b) of another seeding and growth bar (9) by connecting means so as to adjust the length thereof.

## Patentansprüche

1. Verfahren zum Kultivieren von Pflanzenprodukten ohne Erde, umfassend die folgenden Schritte:
a) Bereitstellen wenigstens eines Kultivierungsgestells (7), das einen Tragrahmen (19) und mehrere Aussaat- und Wachstumsschienen (9), die aus Polymermaterial hergestellt sind, die leicht lösbar mit dem Tragrahmen (19) gekoppelt sind und im Wesentlichen koplanar miteinander in parallelen Positionen nebeneinander angeordnet sind, umfasst, wobei die Aussaat- und Wachstumsschienen (9) Streben sind,
wobei die Aussaat- und Wachstumsschienen (9) geradlinig entlang jeweiliger Längsachsen (A) verlaufen und mit Aufnahmen (10) versehen sind, die ausgelegt sind, Saatgut (SM) und/oder Pillen (P1), die Saatgut (SM) enthalten, aufzunehmen,
wobei die Aufnahmen (10) durch konkave Vertiefungen gebildet sind, die an den entsprechenden Bodenwänden (11) jeweils Durchgangsöffnungen (12) haben, die so strukturiert sind, um von den Wurzeln der Pflanzenprodukte während des Wachstums durchquert zu werden und um in direktem Kontakt mit diesen zu bleiben,
wobei die Aufnahmen (10) in Längsrichtung nacheinander entlang der jeweiligen Aussaat- und Wachstumsschienen (9) voneinander beabstandet und im Inneren ohne Schichten oder Substrate zum Halten oder Ergreifen der Wurzeln der Pflanzenprodukte angeordnet sind,
b) selektives Anordnen des Saatguts (SM) und/oder der Pillen (P1), die Saatgut (SM) enthalten, in die jeweiligen Aufnahmen (10), so dass das Saatgut (SM) und/oder die Pille (P1) direkt darauf ruht und in Kontakt mit der inneren Oberfläche der Aufnahme (10) ist, wobei zwischen dem Saatgut (SM) und/oder der Pille (P1) und der Durchgangsöffnung (12) der Aufnahme (10) keine Tragschichten oder Substrate angeordnet sind;
c) Zuführen von Substanzen auf Düngemittelbasis zum Saatgut (SM) und/oder den Pillen (P1), die in den Aufnahmen (10) der Aussaat- und Wachstumsschienen (9) enthalten sind.

2. Verfahren nach Anspruch 1, wobei nach dem Durchführen des Schritts des selektiven Anordnens des Saatguts (SM) und/oder der Pillen (P1), die Saatgut (SM) enthalten, in den entsprechenden Aufnahmen (10) die Aufnahmen (10) im Inneren lediglich das Saatgut (SM) und/oder die Pillen (P1) enthalten und zwischen dem Saatgut (SM) und/oder der Pille (P1) und der Durchgangsöffnung (12) keine Tragschichten oder Substrate enthalten.

3. Verfahren nach Anspruch 1 oder 2, umfassend:
in einem ersten Kultivierungsschritt, dem eine erste Kultivierungsdichte zugeordnet ist, Koppeln der Aussaat- und Wachstumsschienen (9) mit einem Tragrahmen (19) eines ersten Gestells (7), so dass die Schienen (9) mit einem ersten festgelegten Abstand voneinander angeordnet sind,
in einem zweiten Kultivierungsschritt, der dem ersten Kultivierungsschritt folgt und dem eine zweite Kultivierungsdichte zugeordnet ist, die niedriger als die erste Kultivierungsdichte ist, Entkoppeln der Schienen (9) von dem entsprechenden Tragrahmen (19) des ersten Gestells (7) und Koppeln derselben mit dem Tragrahmen (19) eines zweiten Gestells (7), um diese mit einem zweiten festgelegten Abstand voneinander, der größer als der erste festgelegte Abstand ist, anzuordnen.

4. Verfahren nach Anspruch 3, wobei der Schritt des selektiven Entkoppelns der Schienen (9) von dem Tragrahmen (19) des ersten Gestells (7) und Koppelns derselben mit dem Tragrahmen (19) eines zweiten Gestells (7) durch ein automatisiertes mechanisches System (40) ausgeführt wird.

5. Verfahren nach Anspruch 3 oder 4, umfassend den Schritt des Koppelns von Deckeln (34), die eine längliche rechteckige Form haben, mit dem Tragrahmen (19) des zweiten Kultivierungsgestells (7), um die Lücken, die zwischen den voneinander beabstandeten Schienen (9) vorhanden sind, zu bedecken.

6. Verfahren nach einem der vorhergehenden Ansprüche, wobei die Aussaat- und Wachstumsschienen (9) monolithisch sind.

7. Verfahren nach einem der vorhergehenden Ansprüche, wobei ein axiales Ende (9a) der Aussaat- und Wachstumsschiene (9) mit einem axialen Ende (9b) einer weiteren Aussaat- und Wachstumsschiene (9) durch Verbindungsmittel fest verbunden werden kann, um deren Länge anzupassen.

8. Verfahren nach einem der vorhergehenden Ansprüche, wobei die Pille (P1) einen näherungsweise kugelförmigen oder eiförmigen Körper umfasst, der aus hydrophiler Gelatine hergestellt ist, die das Saatgut (SM) enthält.

9. Verfahren nach Anspruch 8, wobei die Aufnahmen (10) in einer Form vorliegen, die näherungsweise komplementär zur Form der Pillen (P1) ist, um Aufnahmemulden für die Pillen (P1) zu bilden.

10. Verfahren nach einem der vorhergehenden Ansprüche, wobei der Abstand zwischen den Aussaat- und Wachstumsschienen (9) ein vielfacher Wert der Länge der Schienen (9) ist.

11. System zum Kultivieren von Pflanzenprodukten ohne Erde, umfassend:
wenigstens eine Kultivierungsstruktur (5), die mit einem oder mehreren Kultivierungsgestellen (7) versehen ist, die ausgelegt sind, Saatgut (SM) und/oder Pillen (P1), die Saatgut enthalten, und/oder Pflanzenprodukte während der Aussaat und des jeweiligen Wachstums der Pflanzenprodukte zu tragen,
wobei die Gestelle (7) Tragrahmen (19) und mehrere Aussaat- und Wachstumsschienen (9), die aus Polymermaterial hergestellt sind, die leicht lösbar mit dem entsprechenden Tragrahmen (19) gekoppelt sind und im Wesentlichen koplanar miteinander in parallelen Positionen nebeneinander angeordnet sind, umfassen, wobei die Aussaat- und Wachstumsschienen (9) Streben sind,
wobei die Aussaat- und Wachstumsschienen (9) geradlinig entlang jeweiliger Längsachsen (A) verlaufen und mit Aufnahmen (10) versehen sind, die ausgelegt sind, Saatgut (SM) und/oder Pillen (P1), die Saatgut (SM) enthalten, aufzunehmen,
wobei die Aufnahmen (10) durch konkave Vertiefungen gebildet sind, die an den entsprechenden Bodenwänden (11) jeweils Durchgangsöffnungen (12) haben, die so strukturiert sind, um von den Wurzeln der Pflanzenprodukte während des Wachstums durchquert zu werden und um in direktem Kontakt mit diesen zu bleiben,
wobei die Aufnahmen (10) in Längsrichtung nacheinander entlang der jeweiligen Aussaat- und Wachstumsschienen (9) voneinander beabstandet und im Inneren ohne Schichten oder Substrate zum Halten oder Ergreifen der Wurzel der Pflanzenprodukte angeordnet sind,
Aussaatmittel (32), die strukturiert sind, um das Saatgut (SM) und/oder die Pillen (P1), die das Saatgut (SM) enthalten, selektiv in den jeweiligen Aufnahmen (10) anzuordnen, so dass das Saatgut (SM) und/oder die Pille (P1) direkt darauf und in Kontakt mit der inneren Oberfläche der Aufnahme (10) ruht, wobei zwischen dem Saatgut (SM) und/oder der Pille (P1) und der Durchgangsöffnung (12) der Aufnahme (10) keine Tragschichten oder Substrate angeordnet sind,
Fertigationsmittel (13) zum Zuführen von Substanzen auf Düngemittelbasis zum Saatgut (SM) und/oder den Pillen (P1), die in den Aufnahmen (10) der Aussaat- und Wachstumsschienen (9) enthalten sind.

12. System nach Anspruch 11, wobei die Aussaat- und Wachstumsschienen (9) mit einem Tragrahmen (19) eines ersten Gestells (7) gekoppelt sind, so dass die Aussaat- und Wachstumsschienen (9) in einem ersten festgelegten Abstand voneinander, dem eine erste Kultivierungsdichte zugeordnet ist, angeordnet sind, wobei das System außerdem umfasst:
ein automatisiertes mechanisches System (40), das so strukturiert ist, dass es festgelegte Aussaat- und Wachstumsschienen (9) von dem Tragrahmen (19) des ersten Kultivierungsgestells (7) selektiv entkoppelt und diese mit dem Tragrahmen (19) eines zweiten Gestells (7) koppelt, um diese in einem zweiten festgelegten Abstand voneinander, der größer als der erste festgelegte Abstand ist, anzuordnen, wobei dem zweiten Abstand eine zweite Kultivierungsdichte zugeordnet ist, die niedriger als die erste Kultivierungsdichte ist,
elektronische Steuermittel, die ausgelegt sind, das automatisierte mechanische System (40) anzusteuern.

13. System nach Anspruch 11 oder 12, wobei nach Durchführen des Schritts des selektiven Anordnens des Saatguts (SM) und/oder der Pillen (P1), die Saatgut (SM) enthalten, in den jeweiligen Aufnahmen (10) mittels der Aussaatmittel (32) die Aufnahmen (10) der Aussaat- und Wachstumsschienen (9) im Inneren nur das Saatgut (SM) und/oder die Pillen (P1) enthalten und zwischen dem Saatgut (SM) und/oder den Pillen (P1) und den Durchgangsöffnungen (12) keine Tragschichten oder Substrate enthalten.

14. System nach einem der Ansprüche 11 bis 13, wobei die Aussaat- und Wachstumsschienen (9) monolithisch sind.

15. System nach einem der Ansprüche 11 bis 14, wobei ein axiales Ende (9a) der Aussaat- und Wachstumsschiene (9) mit einem axialen Ende (9b) einer weiteren Aussaat- und Wachstumsschiene (9) mittels Verbindungsmitteln fest verbunden werden kann, um deren Länge anzupassen.

## Revendications

1. Procédé pour cultiver des produits végétaux sans sol, comprenant les étapes suivantes :
a) fourniture d'au moins une étagère de culture (7), qui comprend un cadre de support (19) et une pluralité de barres d'ensemencement et de croissance (9) constituées de matériau polymère, qui sont couplées de manière facilement amovible audit cadre de support (19) et sont agencées de manière sensiblement coplanaire les unes par rapport aux autres dans des positions parallèles, côte à côte, lesdites barres d'ensemencement et de croissance (9) étant des tiges,
les barres d'ensemencement et de croissance (9) s'étendant en ligne droite le long d'axes longitudinaux respectifs (A), et étant munies de sièges (10) qui sont adaptés pour loger des graines (SM) et/ou des pilules (P1) contenant lesdites graines (SM),
lesdits sièges (10) étant faits par des évidements concaves ayant sur les parois de fond correspondantes (11) des ouvertures traversantes respectives (12) structurées pour être traversées par, et rester en contact direct avec, les racines des produits végétaux pendant leur croissance,
lesdits sièges (10) étant agencés longitudinalement les uns après les autres le long desdites barres d'ensemencement et de croissance respectives (9) espacées les unes des autres et intérieurement sans aucune couche ou substrat pour le support ou la préhension desdites racines desdits produits végétaux,
b) placement sélectif desdites graines (SM) et/ou desdites pilules (P1) contenant des graines (SM) dans les sièges respectifs (10) de sorte que la graine (SM) et/ou la pilule (P1) repose directement sur, et est en contact avec, la surface interne du siège (10) de celui-ci sans aucune interposition de couches de support ou de substrats entre ladite graine (SM) et/ou pilule (P1) et ladite ouverture traversante (12) dudit siège (10) ;
c) fourniture de substances à base de fertiliseur aux graines (SM) et/ou auxdites pilules (P1) contenues dans lesdits sièges (10) desdites barres d'ensemencement et de croissance (9).

2. Procédé selon la revendication 1, dans lequel, après avoir réalisé l'étape de placement sélectivement desdites graines (SM) et/ou desdites pilules (P1) contenant des graines (SM) à l'intérieur des sièges (10) respectifs, lesdits sièges (10) contiennent intérieurement uniquement lesdites graines (SM) et/ou lesdites pilules (P1) et ne contiennent pas de couches de support ou de substrats entre la graine (SM) et/ou la pilule (P1) et ladite ouverture traversante (12).

3. Procédé selon les revendications 1 ou 2, comprenant :
dans une première étape de culture associée à une première densité de culture, le couplage desdites barres d'ensemencement et de croissance (9) à un cadre de support (19) d'une première étagère (7) de sorte que lesdites barres (9) sont agencées à une première distance prédéfinie les unes des autres,
dans une seconde étape de culture qui est ultérieure à ladite première étape de culture et qui est associée à une seconde densité de culture inférieure à la première densité de culture, le découplage des barres (9) du cadre de support correspondant (19) de ladite première étagère (7) et leur couplage au cadre de support (19) d'une seconde étagère (7) de façon à les agencer à une seconde distance prédéfinie les unes des autres supérieure à ladite première distance prédéfinie.

4. Procédé selon la revendication 3, dans lequel ladite étape de découplage sélectif desdites barres (9) du cadre de support (19) de ladite première étagère (7) et de leur couplage au cadre de support (19) d'une seconde étagère (7) est réalisée par un système mécanique automatisé (40) .

5. Procédé selon les revendications 3 ou 4, comprenant l'étape de couplage des couvercles (34) ayant une forme rectangulaire allongée au cadre de support (19) de ladite seconde étagère de culture (7) de manière à couvrir les espaces présents entre les barres (9) espacées les unes des autres.

6. Procédé selon l'une quelconque des revendications précédentes, dans lequel lesdites barres d'ensemencement et de croissance (9) sont monolithiques.

7. Procédé selon l'une quelconque des revendications précédentes, dans lequel une extrémité axiale (9a) de la barre d'ensemencement et de croissance (9) peut être reliée de manière fixe à une extrémité axiale (9b) d'une autre barre d'ensemencement et de croissance (9) par des moyens de liaison de manière à en ajuster la longueur.

8. Procédé selon l'une quelconque des revendications précédentes, dans lequel ladite pilule (P1) comprend un corps approximativement sphérique ou ovoïde en gélatine hydrophile qui incorpore ladite graine (SM).

9. Procédé selon la revendication 8, dans lequel lesdits sièges (10) ont une forme approximativement complémentaire à la forme des pilules (P1) de manière à former des berceaux de confinement des pilules (P1).

10. Procédé selon l'une quelconque des revendications précédentes, dans lequel la distance entre les barres d'ensemencement et de croissance (9) est une valeur multiple de la longueur desdites barres (9).

11. Système de culture de produits végétaux sans sol comprenant :
au moins une structure de culture (5) pourvue d'une ou plusieurs étagères de culture (7) conçues pour supporter des graines (SM) et/ou des pilules (P1) contenant lesdites graines et/ou produits végétaux pendant l'ensemencement et respectivement la croissance desdits produits végétaux,
lesdites étagères (7) comprenant des cadres de support (19) et une pluralité de barres d'ensemencement et de croissance (9) faites de matériau polymère, qui sont couplées de manière facilement amovible avec le cadre de support respectif (19) et sont agencées de manière sensiblement coplanaire les unes par rapport aux autres dans des positions parallèles, côte à côte, lesdites barres d'ensemencement et de croissance (9) étant des barres,
les barres d'ensemencement et de croissance (9) s'étendant de manière rectiligne le long d'axes longitudinaux respectifs (A), et étant munies de sièges (10) qui sont adaptés pour loger des graines (SM) et/ou des pilules (P1) contenant lesdites graines (SM),
lesdits sièges (10) étant constitués par des évidements concaves ayant sur les parois de fond correspondantes (11) des ouvertures traversantes respectives (12) structurées pour être traversées par, et rester en contact direct avec, les racines des produits végétaux pendant leur croissance,
lesdits sièges (10) étant agencés longitudinalement les uns après les autres le long desdites barres d'ensemencement et de croissance respectives (9) espacées les unes des autres et étant intérieurement dépourvus de toute couche ou substrat pour le support ou la préhension desdites racines desdits produits végétaux,
des moyens d'ensemencement (32) structurés pour placer sélectivement lesdites graines (SM) et/ou lesdites pilules (P1) contenant des graines (SM) à l'intérieur des sièges respectifs (10) de sorte que la graine (SM) et/ou la pilule (P1) repose directement sur, et en contact avec, la surface intérieure du siège (10) de celui-ci sans aucune interposition de couches de support ou de substrats entre ladite graine (SM) et/ou pilule (P1) et ladite ouverture traversante (12) dudit siège (10),
des moyens de fertigation (13) pour fournir des substances à base d'engrais aux graines (SM) et/ou auxdites pilules (P1) contenues dans lesdits sièges (10) desdites barres d'ensemencement et de croissance (9).

12. Système selon la revendication 11, lesdites barres d'ensemencement et de croissance (9) étant couplées à un cadre de support (19) d'une première étagère (7) de sorte que lesdites barres d'ensemencement et de croissance (9) sont agencées à une première distance prédéfinie les unes des autres associée à une première densité de culture, le système comprenant également :
un système mécanique automatisé (40) structuré pour découpler sélectivement des barres d'ensemencement et de croissance prédéfinies (9) du cadre de support (19) de ladite première étagère de culture (7) et les coupler au cadre de support (19) d'une seconde étagère (7) de manière à les agencer à une seconde distance prédéfinie les unes des autres supérieure à ladite première distance prédéfinie, la seconde distance étant associée à une seconde densité de culture inférieure à la première densité de culture,
des moyens de commande électroniques adaptés pour commander ledit système mécanique automatisé (40).

13. Système selon les revendications 11 ou 12, dans lequel, après avoir réalisé l'étape d'agencement sélectivement desdites graines (SM) et/ou desdites pilules (P1) contenant des graines (SM) à l'intérieur des sièges respectifs (10) par l'intermédiaire dudit moyen d'ensemencement (32), lesdits sièges (10) des barres d'ensemencement et de croissance (9) contiennent intérieurement uniquement lesdites graines (SM) et/ou lesdites pilules (P1) et ne contiennent pas de couches de support ou de substrats entre les graines (SM) et/ou les pilules (P1) et lesdites ouvertures traversantes (12).

14. Système selon l'une quelconque des revendications 11 à 13, dans lequel lesdites barres d'ensemencement et de croissance (9) sont monolithiques.

15. Système selon l'une quelconque des revendications 11 à 14, dans lequel une extrémité axiale (9a) de la barre d'ensemencement et de croissance (9) peut être reliée de manière fixe à une extrémité axiale (9b) d'une autre barre d'ensemencement et de croissance (9) par des moyens de connexion de manière à ajuster sa longueur.
